# EUROPÄISCHE PATENTSCHRIFT

(11) **EP 2 938 893 B1**
(45) Veröffentlichungstag und Bekanntmachung des Hinweises auf die Patenterteilung: **15.07.2020**
(21) Anmeldenummer: 13807937.1
(22) Anmeldetag: 11.12.2013
(51) Int. Cl.: F03D 80/00, F16C 19/54, F03D 17/00, F03D 80/70, F16C 25/06, F16C 19/52

(54) **BAUTEILANORDNUNG FÜR EINE WINDENERGIEANLAGE, MONTAGEVERFAHREN UND BETRIEBSVERFAHREN**
COMPONENT ASSEMBLY FOR A WIND ENERGY INSTALLATION, MOUNTING METHOD AND OPERATING METHOD
AGENCEMENT D'ÉLÉMENTS POUR UNE INSTALLATION À ÉNERGIE ÉOLIENNE , PROCÉDÉ DE MONTAGE ET PROCÉDÉ DE FONCTIONNEMENT

(30) Priorität: 27.12.2012 DE 102012224423
(43) Veröffentlichungstag der Anmeldung: 04.11.2015
(73) Patentinhaber: Senvion GmbH, 22297 Hamburg (DE)
(72) Erfinder: HAMBRECHT, Ralf, 24787 Fockbek (DE)
(74) Vertreter: Wallinger Ricker Schlotter Tostmann
(86) Internationale Anmeldenummer: PCT/EP2013/003742
(87) Internationale Veröffentlichungsnummer: WO 2014/101983

(56) Entgegenhaltungen:
- EP-A1- 0 534 537
- EP-A2- 1 717 464
- EP-A2- 2 290 250
- WO-A1-03/019126

## Beschreibung

Die Erfindung betrifft eine Bauteilanordnung für eine Windenergieanlage umfassend ein äußeres Bauteil, ein innerhalb des äußeren Bauteils angeordnetes inneres Bauteil und ein Wälzlagerpaar, das ein erstes Wälzlager und ein zweites Wälzlager, die angestellt zueinander angeordnet sind, aufweist und mittels einer Spannkraft vorgespannt ist, wobei das innere Bauteil und das äußere Bauteil mittels des Wälzlagerpaares um eine Drehachse drehbar zueinander gelagert sind, wobei die Bauteilanordnung ferner einen in einem Kraftfluss der Spannkraft angeordneten Drucksensor zur Bestimmung einer Vorspannung des Wälzlagerpaares umfasst. Die Erfindung betrifft des Weiteren ein Verfahren zur Montage einer derartigen Lageranordnung. Die Erfindung betrifft außerdem eine Windenergieanlage und ein Verfahren zum Betreiben einer Windenergieanlage.

EP 2 290 250 A2 offenbart einen Lagerkopf für eine rotierende Welle einer Windenergieanlage.

WO 03/019126 A1 offenbart eine Einrichtung zur Ermittlung von auf einer Radaufhängung eines Rades eines Fahrzeuges einwirkenden Kräften und/oder Momenten.

In EP 0 534 537 A1 wird ein Verfahren offenbart, mit dem ein mit einem Schraubengewinde versehenes Element unter Verwendung einer spezifischen Vorspannkraft in ein Schraubengewinde eingeschraubt werden kann.

EP 1 717 464 A2 offenbart eine Rolllagervorrichtung, die mit einem Verspannungssensor ausgestattet ist.

Bei modernen Windenergieanlagen werden an verschiedenen Stellen angestellte Lagerungen eingesetzt, beispielsweise als Rotorlagerung, als Wellenlagerung oder als Lagerung beweglicher Bauteile innerhalb eines Getriebes oder eines Generators der Windenergieanlage.

Eine angestellte Lagerung umfasst in der Regel zwei Wälzlager, die zwei zueinander drehbare Bauteile radial, d.h. quer zur Rotationsachse, gegeneinander abstützen. Axial, d.h. parallel zur Rotationsachse, sind die beiden Wälzlager gegeneinander vorgespannt. Angestellte Lagerungen haben den Vorteil, dass sie radiale Kräfte, axiale Kräfte und Kippmomente aufnehmen können und dabei axial spielfrei sind.

Besondere Bedeutung für die Funktionsfähigkeit und Lebensdauer einer angestellten Lagerung hat die korrekte Vorspannung der Lagerung. Bei zu schwacher Vorspannung besteht die Gefahr, dass die Wälzkörper bzw. der Wälzkörpersatz schlupft und Schlupfschäden auftreten können und dass die Lagerung unter Belastung nicht mehr spielfrei ist und dadurch insbesondere die Wälzlager ungleichmäßig belastet werden, was zu übermäßig starken Spitzenbelastungen führt. Bei zu starker Vorspannung werden die Wälzlager ebenfalls übermäßig belastet. In beiden Fällen wird dadurch die Funktionalität der Lagerung beeinträchtigt und, beispielsweise durch erhöhte Lagerreibung, der mechanische Wirkungsgrad der Windenergieanlage gemindert. Gleichzeitig wird die Lebensdauer der Lagerung, insbesondere durch erhöhten Verschleiß, erheblich verkürzt.

Zur Vermeidung von Folgeschäden aufgrund beschädigter Lagerungen weisen moderne Windenergieanlagen oft Überwachungssysteme auf, die Lagerschäden beispielsweise anhand erhöhter Vibrationen erkennen können. Auffällige Lagerungen werden in der Regel frühzeitig ersetzt, was jedoch regelmäßig mit erheblichem Aufwand verbunden ist und Standzeiten der Windenergieanlage mit entsprechendem Ertragsausfall nach sich zieht. Es hat sich in der Praxis gezeigt, dass die errechnete Lebensdauer einer Lagerung hierbei oftmals nicht erreicht wird.

Ausgehend von diesem Stand der Technik besteht die Aufgabe der Erfindung darin, die Lebensdauer einer angestellten Lagerung einer Windenergieanlage zu verbessern und Ertragsausfälle der Windenergieanlage aufgrund eingeschränkter Funktionalität der angestellten Lagerung zu vermeiden.

Diese Aufgabe wird erfindungsgemäß gelöst durch eine Bauteilanordnung für eine Windenergieanlage umfassend ein äußeres Bauteil, ein innerhalb des äußeren Bauteils angeordnetes inneres Bauteil und ein Wälzlagerpaar, das ein erstes Wälzlager und ein zweites Wälzlager, die angestellt zueinander angeordnet sind, aufweist und mittels einer Spannkraft vorgespannt ist, wobei das innere Bauteil und das äußere Bauteil mittels des Wälzlagerpaares um eine Drehachse drehbar zueinander gelagert sind, wobei die erfindungsgemäße Bauteilanordnung dadurch weitergebildet ist, dass die Bauteilanordnung ferner einen in einem Kraftfluss der Spannkraft angeordneten Drucksensor zur Bestimmung einer Vorspannung des Wälzlagerpaares umfasst, wobei der Drucksensor als Dünnschichtsensor ausgebildet ist, wobei die Bauteilanordnung wenigstens einen bei dem ersten Wälzlager angeordneten ersten Drucksensor und einen bei dem zweiten Wälzlager angeordneten zweiten Drucksensor umfasst.

Es ist insbesondere ein Vorteil der Erfindung, dass eine der Hauptursachen für Lagerschäden, nämlich eine falsche, insbesondere zu hohe oder zu geringe, Vorspannung, bereits erkennbar ist, bevor Lagerschäden mit nachweisbaren Folgesymptomen, beispielsweise verminderter Laufruhe, erhöhter Vibration und Geräuschentwicklung oder erhöhter Wärmeentwicklung in der Lagerung, auftreten. Dadurch wird eine Korrektur oder Anpassung der Vorspannung, insbesondere durch entsprechende Änderung der Spannkraft, ermöglicht, bevor Schäden an der Lagerung, insbesondere an den Wälzlagern, auftreten. Dadurch wird die optimale Funktionalität der mittels der Wälzlager gebildeten Lagerung sichergestellt, die Lebensdauer der Wälzlager verbessert und so eine Ertragsminderung einer Windenergieanlage aufgrund eingeschränkter Funktionalität der Lagerung insgesamt oder der Wälzlager einzeln vermieden.

Ein Bauteil im Sinne der Erfindung kann einstückig ausgebildet sein oder mehrere lösbar oder unlösbar miteinander verbundene Teilbauteile umfassen.

Ein Wälzlager im Sinne der Erfindung weist insbesondere zwei konzentrische, einander zugewandte Laufflächen auf, zwischen denen Wälzkörper angeordnet sind. Die Wälzkörper sind beispielsweise kugel-, kegel-, zylinder-, nadel- oder tonnenförmig und rollen bei Drehung der Laufflächen gegeneinander auf den Laufflächen ab. Die Laufflächen können abschnittsweise formkomplementär zu den Wälzlagern ausgeformt sein, um eine größere Kontaktfläche zwischen Wälzkörpern und Lauffläche und damit eine höhere Belastbarkeit des Wälzlagers zu erreichen.

Ein Wälzlager umfasst ferner beispielsweise einen Innenring, an dessen äußerem Umfang die innere der beiden Laufflächen ausgebildet ist und der mit dem inneren Bauteil verbunden oder verbindbar ist. Alternativ ist die innere Lauffläche an einer, insbesondere radial nach außen gewandten, Oberfläche des inneren Bauteils ausgebildet.

Ein Wälzlager umfasst außerdem beispielsweise einen Außenring, an dessen innerem Umfang die äußere der beiden Laufflächen ausgebildet ist und der mit dem äußeren Bauteil verbunden oder verbindbar ist. Alternativ ist die äußere Lauffläche an einer, insbesondere radial nach innen gewandten, Oberfläche des äußeren Bauteils ausgebildet.

Ein Wälzlager der erfindungsgemäßen Bauteilanordnung ist insbesondere ausgebildet, radiale Belastungen und axiale Belastungen in wenigstens einer Richtung aufzunehmen oder abzustützen. Derartige Wälzlager sind beispielsweise im Stand der Technik bekannte Schrägkugellager, Kegelrollenlager, Vierpunktlager, Pendelrollenlager, Tonnenlager, Kugelrollenlager, Schrägzylinderrollenlager oder Zylinderrollenlager oder Rillenkugellager mit Hauptdruckwinkel in radialer oder auch in axialer Richtung.

Im Rahmen der Erfindung beziehen sich die Angaben axial und radial jeweils auf die Drehachse der zueinander drehbar gelagerten oder zu lagernden Bauteile, wobei insbesondere eine Richtung entlang der Drehachse als axial und eine Richtung quer zur Drehachse als radial bezeichnet wird.

Erfindungsgemäß sind die Wälzlager angestellt zueinander angeordnet. Darunter wird insbesondere verstanden, dass die beiden Wälzlager der Bauteilanordnung jeweils Kräfte oder Momente in entgegengesetzter axialer Richtung aufnehmen oder abstützen können, so dass die Bauteile der Bauteilanordnung durch das Wälzlagerpaar axial spielfrei lagerbar oder gelagert sind.

Das Wälzlagerpaar ist erfindungsgemäß mittels einer Spannkraft vorgespannt, wobei eine Spannkraft im Sinne der Erfindung insbesondere eine Druckkraft ist, mit der das Wälzlagerpaar oder die Wälzlager einzeln, insbesondere in axialer Richtung, beaufschlagbar oder beaufschlagt sind.

Unter einem Kraftfluss der Spannkraft wird im Rahmen der Erfindung insbesondere die Verteilung, Abstützung oder Ableitung der Spannkraft innerhalb der Bauteilanordnung verstanden. Größtenteils kompensieren sich radiale Komponenten des Kraftflusses dabei wechselseitig, beispielsweise durch lachssymmetrische Konstruktion der Wälzlager. Axiale Komponenten des Kraftflusses werden durch wenigstens eine zugbelastete Komponente der Bauteilanordnung, die insbesondere das innere Bauteil oder das äußere Bauteil ist, abgeleitet oder abgestützt.

Die Spannkraft bewirkt insbesondere eine Vorspannung des Wälzlagerpaares. Darunter wird im Rahmen der Erfindung insbesondere verstanden, dass die Wälzlager des Wälzlagerpaares mittels der Spannkraft derart zusammengedrückt werden, dass die Wälzlager jeweils ein Untermaß oder eine Bauhöhenreduktion bzw. Bauhöhenkomprimierung aufweisen.

Eine durch die Spannkraft bewirkte Vorspannung des Wälzlagerpaares wird erfindungsgemäß mittels eines Drucksensors bestimmt, der innerhalb des Kraftflusses der Spannkraft, beispielsweise am Übergang zwischen einem Wälzlager und einem Bauteil oder innerhalb eines Wälzlagers, angeordnet ist.

Die Spannkraft wird beispielsweise bei der Montage einer erfindungsgemäßen Bauteilanordnung vorgegeben und iterativ unter Bestimmung der Vorspannung mittels des Drucksensors auf einen optimalen Wert eingestellt.

Die Bauteilanordnung umfasst vorzugsweise zum Vorspannen des Wälzlagerpaares mittels einer vorgebbaren Spannkraft eine an dem ersten Wälzlager angreifende erste Spannvorrichtung und/oder eine an dem zweiten Wälzlager angreifende zweite Spannvorrichtung.

Eine Spannvorrichtung weist insbesondere einen in axialer Richtung verschiebbaren Anschlag für ein Wälzlager auf, der insbesondere lösbar an dem ersten Bauteil oder dem zweiten Bauteil befestigt oder befestigbar ist.

Ein axial oder in axialer Richtung verschiebbarer Anschlag wird beispielsweise unter Verwendung von geeigneten Verschraubungen, eingelegten Passblechen angepasster Dicke, hydraulisch oder pneumatisch spreizbaren Distanzringen, hydraulisch vorspannbaren Wellenmuttern oder in vorbestimmter Position durch Querpressverbindung fixierten Bolzen realisiert. Hierdurch wird insbesondere eine einfache Änderung oder Anpassung der Spannkraft ermöglicht.

Wenn lediglich eine Spannvorrichtung vorgesehen ist, wird das Wälzlagerpaar einseitig vorgespannt. Dabei ergibt sich in der Regel bei einer Änderung der Spannkraft eine axiale Verschiebung des inneren Bauteils und des äußeren Bauteils relativ zueinander, die im Einzelfall unerwünscht sein kann.

Wenn hingegen zwei Spannvorrichtungen vorgesehen sind, wird das Wälzlagerpaar insbesondere beidseitig vorgespannt. Dadurch wird vorteilhafterweise eine axiale Justierung oder Ausrichtung des inneren Bauteils und des äußeren Bauteils relativ zueinander bei gleichzeitiger Anpassung der Spannkraft ermöglicht.

Bevorzugt ist des Weiteren, wenn der Drucksensor an einer einer Spannvorrichtung abgewandten Seite eines Wälzlagers angeordnet ist. Hierdurch wird vorteilhafterweise bei einer Ermittlung oder Bestimmung der Spannkraft ein etwaig auftretender Vorspannungsverlust zwischen der Spannvorrichtung und dem Drucksensor, beispielsweise aufgrund von Reibung oder plastischer Verformung innerhalb des Kraftflusses der Spannkraft, berücksichtigt. Dadurch wird eine höhere Genauigkeit bei der Ermittlung der Vorspannung erreicht.

Wenn lediglich eine Spannvorrichtung an einem der beiden Wälzlager vorgesehen ist, ist der Drucksensor vorzugsweise an dem anderen der beiden Wälzlager, insbesondere an der dem Wälzlager mit der Spannvorrichtung abgewandten Seite, angeordnet. Auf diese Weise wird optimale Genauigkeit bei der Bestimmung einer mittleren Vorspannung beider Wälzlager erreicht.

Ein besonders bevorzugter Drucksensor ist als Dünnschichtsensor mit einer piezo-elektrischen oder piezo-resistiven Sensorschicht ausgebildet. Bekannte Dünnschichtsensoren weisen in der Regel Dicken von weniger als einem Millimeter bis hin zu wenigen Mikrometern auf, wobei die Dicke keine oder nur eine sehr geringe Abhängigkeit von einem mittels des Sensors zu bestimmenden Druck aufweist.

Dadurch ergibt sich insbesondere der Vorteil, dass der im Kraftfluss der Spannkraft angeordnete Drucksensor die axiale Ausdehnung der Lageranordnung und somit die Spannkraft nicht nennenswert beeinflusst. Außerdem wird die axiale Ausrichtung der gelagerten Bauteile zueinander durch den Drucksensor nicht beeinflusst.

Ein weiterer Vorteil eines Dünnschichtsensors besteht darin, dass derartige Sensoren sehr vielfältig einsetzbar sind. Beispielsweise ist es möglich, die Sensorschicht direkt auf ein Bauteil, beispielsweise auf eine Funktionsfläche, insbesondere eine Lauffläche oder Anlagefläche, eines Lagerrings innerhalb eines Wälzlagers, aufzubringen. Derartige integrierte Dünnschichtsensoren erlauben dann die direkte Messung einer innerhalb eines Wälzlagers vorliegenden Spannkraft.

Alternativ ist der Dünnschichtsensor als eigenständiges Bauteil, insbesondere mit einem von den übrigen Bestandteilen der Bauteilanordnung unabhängigen Schichtträger für die Sensorschicht, ausgebildet.

Geeignete Schichtträger sind beispielsweise Folien oder dünne Plättchen aus Kunststoff, Metall oder Keramik.

Als eigenständige Bauteile ausgebildete Dünnschichtsensoren sind insbesondere wesentlich billiger als integrierte Dünnschichtsensoren und können bei Defekten einfach und kostengünstig ersetzt werden.

In einer bevorzugten Weiterbildung der Erfindung weist die Bauteilanordnung eine Auswertungsvorrichtung zur Auswertung von Messsignalen des Drucksensors auf.

Hierdurch wird insbesondere eine automatische und/oder regelmäßige Bestimmung der Spannkraft, insbesondere auch im laufenden Betrieb der Windenergieanlage, ermöglicht.

Zusätzlich oder alternativ weist die Bauteilanordnung beispielsweise einen Anschluss zur Verbindung des Drucksensors mit einer externen Auswertungsvorrichtung zur Auswertung von Messsignalen des Drucksensors auf. Auf diese Weise steht eine einzige Auswertungsvorrichtung für eine Vielzahl von Bauteilanordnungen bzw. deren Drucksensoren zur Verfügung.

Die Genauigkeit bei der Bestimmung der Vorspannung der beiden Wälzlager wird dadurch weiter erhöht, dass die erfindungsgemäße Bauteilanordnung wenigstens einen bei dem ersten Wälzlager angeordneten ersten Drucksensor und einen bei dem zweiten Wälzlager angeordneten zweiten Drucksensor aufweist. Hierdurch wird eine separate Bestimmung der Vorspannung des ersten Wälzlagers und der Vorspannung des zweiten Wälzlagers ermöglicht.

Außerdem wird bei einem ersten Drucksensor und einem zweiten Drucksensor eine wechselseitige Funktionskontrolle gewährleistet und es ergibt sich eine erhöhte Ausfallsicherheit, weil auch bei Defekt eines der beiden Drucksensoren immer noch eine Vorspannung für beide Wälzlager mittels des anderen Drucksensors ermittelt oder bestimmt werden kann.

Ebenfalls von der Erfindung umfasst sind auch Ausführungsformen mit weiteren Drucksensoren, wobei beispielsweise bei beiden Wälzlagern jeweils beidseitig ein Drucksensor angeordnet ist.

Vorzugsweise umfasst die Bauteilanordnung wenigstens drei Drucksensoren, die insbesondere in einer quer zur Drehachse orientierten Ebene angeordnet sind. Beispielsweise sind die wenigstens drei Drucksensoren entlang eines Kreises um die Drehachse in gleichmäßigem Abstand zueinander angeordnet.

Dadurch wird erreicht, dass neben der Vorspannung auch eine radiale Asymmetrie der Vorspannung bestimmbar ist und daher geeignet kompensiert werden kann.

Eine Asymmetrie der Vorspannung, die zum Beispiel durch ungleichmäßiges Anziehen der Befestigungsschrauben eines Lagerdeckels hervorgerufen sein kann, führt zu einer ungleichmäßigen Belastung der Wälzlager, wodurch die Wälzlager entlang ihres Umfangs jeweils Bereiche mit zu hoher Vorspannung und/oder Bereiche mit zu geringer Vorspannung aufweisen können, selbst wenn die über den Umfang gemittelte Vorspannung der entsprechenden Vorgabe entspricht. Wie bei einer insgesamt falschen Vorspannung steigt auch bei einer Asymmetrie der Vorspannung die Wahrscheinlichkeit von Schäden an den Wälzlagern, die zu vorzeitigem Ausfall führen können.

Eine asymmetrische Vorspannung ergibt sich beispielsweise aufgrund einer radialen Belastung der Bauteilanordnung, wenn die Wälzlager nicht exakt parallel zueinander und/oder nicht exakt konzentrisch um die Drehachse ausgerichtet sind oder wenn die Spannkraft eine radiale Asymmetrie aufweist. Im Umkehrschluss ist eine radiale Asymmetrie der Vorspannung mittels einer geeignet gewählten Asymmetrie der Spannkraft kompensierbar.

Vorzugsweise ist die Bauteilanordnung als ein Bestandteil für einen Triebstrang der Windenergieanlage, insbesondere als eine Rotorlagerung, als ein Getriebe, als ein Generator oder als ein Teil einer Rotorlagerung, eines Getriebes oder eines Generators, ausgebildet.

Beispielsweise ist das innere Bauteil eine Rotorwelle und das äußere Bauteil eine Halterung für einen die Rotorwelle antreibenden Rotor der Windenergieanlage.

Das innere Bauteil und/oder das äußere Bauteil der Bauteilanordnung können auch jeweils ein Bestandteil eines Getriebes oder eines Generators der Windenergieanlage sein.

Die der Erfindung zugrundeliegende Aufgabe wird auch gelöst durch ein Verfahren zur Montage einer erfindungsgemäßen Bauteilanordnung mit folgenden Verfahrensschritten:
- Kalibrieren wenigstens eines Drucksensors der Bauteilanordnung,
- Vorspannen des Wälzlagerpaares der Bauteilanordnung mit einer vorgebbaren Spannkraft,
- Bestimmen eines Ist-Wertes für eine Vorspannung des Wälzlagerpaares mittels des wenigstens einen Drucksensors,
- Vergleich des Ist-Wertes mit einem vorgegebenen Toleranzintervall um einen vorgegebenen Soll-Wert für die Vorspannung, und
- gegebenenfalls Anpassen der Spannkraft, wenn der Ist-Wert außerhalb des Toleranzintervalls liegt.

Der Soll-Wert für die Vorspannung wird insbesondere anhand einer optimalen Vorspannung unter Berücksichtigung einer im Betrieb zu erwartenden Belastung des Wälzlagerpaares vorgegeben.

Das Toleranzintervall wird insbesondere anhand der akzeptablen Montagetoleranzen vorgegeben und gibt die zulässige in Umfangsrichtung symmetrische oder asymmetrische Abweichung des Ist-Wertes vom Soll-Wert an.

Sofern der ermittelte Ist-Wert für die Vorspannung außerhalb des Toleranzintervalls liegt, erfolgt erfindungsgemäß ein Anpassen der Spannkraft. Dies bedeutet insbesondere, dass die Spannkraft, mit der das Wälzlagerpaar vorgespannt ist, erhöht wird, falls der Ist-Wert geringer als der Soll-Wert, insbesondere geringer als eine untere Grenze des Toleranzintervalls, ist und dass die Spannkraft verringert wird, falls der Ist-Wert größer als der Soll-Wert, insbesondere größer als eine obere Grenze des Toleranzintervalls, ist.

Für ein ausreichend genaues Bestimmen des Ist-Wertes wird der wenigstens eine Drucksensor erfindungsgemäß kalibriert.

Vorzugsweise erfolgt das Kalibrieren des Drucksensors in einer Montageposition der Bauteilanordnung mit vertikal angeordneter Drehachse ohne Anlegen einer Spannkraft unter Ausnutzung einer bekannten Masse des inneren Bauteils und/oder des äußeren Bauteils und/oder eines der beiden Wälzlager und/oder beider Wälzlager.

In der Montageposition mit vertikal angeordneter oder orientierter Drehachse wird der Drucksensor insbesondere durch die Gewichtskraft des inneren Bauteils und/oder des äußeren Bauteils und/oder der Wälzlager belastet, sofern diese in der Montageposition oberhalb des Drucksensors angeordnet sind und direkt oder indirekt auf dem Drucksensor aufliegen. Aus den bekannten Massen der auf dem Drucksensor liegenden Komponenten ergibt sich dabei unmittelbar die auf den Drucksensor wirkende Kraft, so dass ein sehr genau bekannter Kalibrationspunkt zur Verfügung steht.

Sofern mehrere Komponenten übereinander auf dem Drucksensor aufliegen, ergeben sich durch schrittweises Hinzufügen der einzelnen Komponenten entsprechend mehrere Kalibrationspunkte, so dass auch nicht-lineare Drucksensoren entsprechend kalibrierbar sind. Zusätzlich ist eine Nullpunktkalibration des Drucksensors vor Hinzufügen der ersten oder, bezogen auf die Montageposition, untersten Komponente, d.h. solange der Drucksensor noch unbelastet ist.

Die der Erfindung zugrundeliegende Aufgabe wird ferner gelöst durch eine Windenergieanlage mit einer Bauteilanordnung, wobei die Bauteilanordnung ein äußeres Bauteil, ein innerhalb des äußeren Bauteils angeordnetes inneres Bauteil und ein Wälzlagerpaar, das ein erstes Wälzlager und ein zweites Wälzlager, die angestellt zueinander angeordnet sind, aufweist und mittels einer Spannkraft vorgespannt ist, wobei das innere Bauteil und das äußere Bauteil mittels des Wälzlagerpaares um eine Drehachse drehbar zueinander gelagert sind, wobei die erfindungsgemäße Bauteilanordnung dadurch weitergebildet ist, dass die Bauteilanordnung ferner einen in einem Kraftfluss der Spannkraft angeordneten Drucksensor zur Bestimmung einer Vorspannung des Wälzlagerpaares umfasst, wobei der Drucksensor als Dünnschichtsensor ausgebildet ist, wobei die Bauteilanordnung wenigstens einen bei dem ersten Wälzlager angeordneten ersten Drucksensor und einen bei dem zweiten Wälzlager angeordneten zweiten Drucksensor umfasst.

Die Bauteilanordnung ist insbesondere eine zuvor beschriebene erfindungsgemäße Bauteilanordnung.

Eine besonders bevorzugte Windenergieanlage umfasst mehrere erfindungsgemäße Bauteilanordnungen. Insbesondere kann jede angestellte Lagerung der Windenergieanlage als Bestandteil einer erfindungsgemäßen Bauteilanordnung mit einem Drucksensor zur Bestimmung einer Vorspannung der Lagerung ausgebildet sein.

Vorzugsweise umfasst die Windenergieanlage ein Betriebsüberwachungssystem zur Erkennung von Betriebsstörungen, wobei insbesondere das Betriebsüberwachungssystem eine Auswertungsvorrichtung zum Auswerten von Messsignalen wenigstens eines Drucksensors der Bauteilanordnung umfasst oder mit einer Auswertungsvorrichtung zum Auswerten von Messsignalen des wenigstens einen Drucksensors der Bauteilanordnung verbunden oder verbindbar ist.

Die der Erfindung zugrundeliegende Aufgabe wird außerdem gelöst durch ein Verfahren zum Betreiben einer Windenergieanlage, insbesondere einer zuvor beschriebenen erfindungsgemäßen Windenergieanlage, mit einer Bauteilanordnung umfassend ein äußeres Bauteil, ein innerhalb des äußeren Bauteils angeordnetes inneres Bauteil und ein Wälzlagerpaar, das ein erstes Wälzlager und ein zweites Wälzlager, die angestellt zueinander angeordnet sind, aufweist und mittels einer Spannkraft vorgespannt ist, wobei das innere Bauteil und das äußere Bauteil mittels des Wälzlagerpaares um eine Drehachse drehbar zueinander gelagert sind, wobei das Verfahren die folgenden Verfahrensschritte umfasst:
- Bestimmen eines Ist-Wertes für die Vorspannung des Wälzlagerpaares, mittels eines in einem Kraftfluss der Spannkraft angeordneten Drucksensors, wobei der Drucksensor als Dünnschichtsensor ausgebildet ist, wobei die Bauteilanordnung wenigstens einen bei dem ersten Wälzlager angeordneten ersten Drucksensor und einen bei dem zweiten Wälzlager angeordneten zweiten Drucksensor umfasst,
- Vergleich des Ist-Wertes mit einem vorgegebenen ersten Referenzintervall um einen Soll-Wert für die Vorspannung und
- Unterbrechen des Betriebs der Windenergieanlage, wenn der Ist-Wert außerhalb des Referenzbereichs liegt.

Das Verfahren ist in jeglichen Betriebsmodi der Windenergieanlage, insbesondere im Volllastbetrieb, im Teillastbetrieb als auch im lastfreien Betrieb und bei Stillstand der Windenergieanlage durchführbar. Wenn dabei festgestellt wird, dass die Vorspannung des Wälzlagerpaares außerhalb des Referenzbereichs liegt, wird erfindungsgemäß der Betrieb der Windenergieanlage unterbrochen und/oder eine Alarmmeldung an eine Fernüberwachungszentrale versendet. Darunter wird insbesondere verstanden, dass die Windenergieanlage automatisch oder manuell in einen gesicherten Stillstandsmodus überführt wird. Dies kann zum Beispiel durch extrem niedrige oder extrem hohe Außentemperaturen verursacht werden. Die Windenergieanlage wird anschließend insbesondere dann wieder für den Normalbetrieb freigegeben, wenn ein, beispielsweise nach Anpassen der Spannkraft, erneut bestimmter Ist-Wert für die Vorspannung des Wälzlagerpaares innerhalb des Referenzintervalls liegt.

Ein besonders bevorzugtes erfindungsgemäßes Verfahren ist dadurch ausgezeichnet, dass der Ist-Wert für die Vorspannung mit einem zweiten Referenzintervall um den Soll-Wert für die Vorspannung, das insbesondere ein Teilintervall des ersten Referenzintervalls ist, verglichen wird, wobei die Spannkraft während einer anschließenden, insbesondere routinemäßig erfolgenden, Betriebsunterbrechung der Windenergieanlage angepasst wird, wenn der Ist-Wert außerhalb des zweiten Referenzintervalls liegt.

Dadurch wird ermöglicht, bereits bei geringen Abweichungen des Ist-Wertes für die Vorspannung vom Soll-Wert die Anpassung der Spannkraft vorzumerken, die dann bei einer regelmäßig stattfindenden Wartung der Windenergieanlage durchgeführt werden kann. Dadurch wird eine Betriebsunterbrechung extra für das Anpassen der Spannkraft vermieden. Das zweite Referenzintervall ist daher insbesondere so eng um den Soll-Wert zu bemessen, dass das Wälzlagerpaar auch ohne Beschädigungen weiter betrieben werden kann.

In einer vorteilhaften Weiterbildung der Erfindung ist vorgesehen, dass das Referenzintervall in Abhängigkeit einer Temperatur bestimmt wird. Hierdurch wird vorteilhaft ermöglicht, die bei großen Bauteilen erhebliche temperaturbedingte Längsausdehnung zu kompensieren und somit engere Toleranzen des Referenzintervalls einzuhalten. Bevorzugt ist die Temperatur hierbei die in der Maschinengondel oder im Getriebe gemessene Temperatur.

Vorzugsweise wird das erfindungsgemäße Verfahren zum Betreiben einer Windenergieanlage so weitergebildet, dass die Betriebslasten des Lagers aufgenommen werden. Mittels einer im Stand der Technik bekannten Auswertung der aufgenommenen Betriebslasten, insbesondere in Form von Lastkollektiven, ist somit eine Prognose der zu erwartenden Restlebensdauer der Lager möglich.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einen typischen Triebstrang einer Windenergieanlage,
- Fig. 2: schematisch eine erfindungsgemäße Lageranordnung in längsaxialer Schnittdarstellung, die jedoch einen Drucksensor nur bei einem Wälzlager illustriert,
- Fig. 3: schematisch die erfindungsgemäße Lageranordnung aus Fig. 2 in einer queraxialen Schnittdarstellung, und
- Fig. 4: schematisch eine Schnittdarstellung eines erfindungsgemäßen Getriebes einer erfindungsgemäßen Windenergieanlage.

In den Zeichnungen sind jeweils gleiche oder gleichartige Elemente und/oder Teile mit denselben Bezugsziffern versehen, so dass von einer erneuten Vorstellung jeweils abgesehen wird.

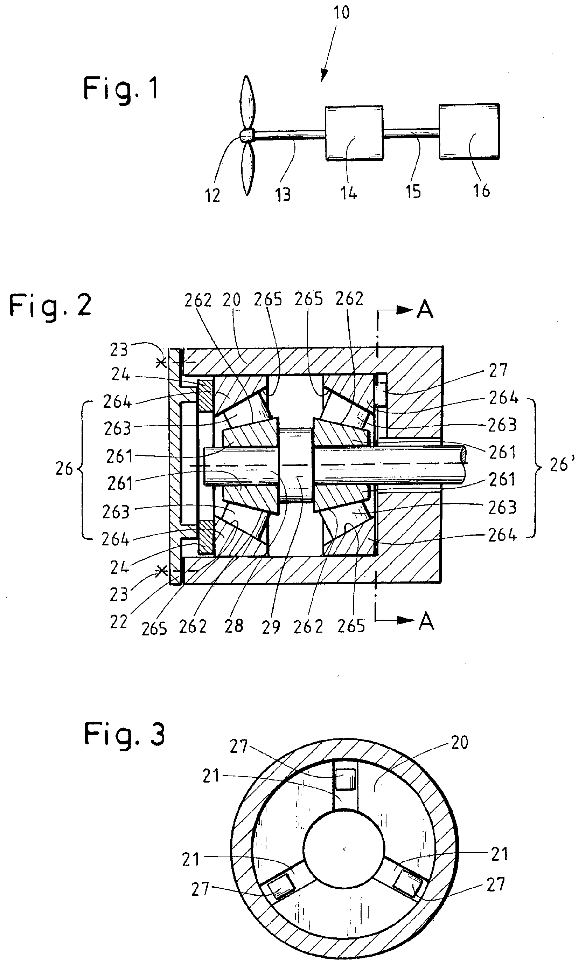

Fig. 1 zeigt schematisch einen typischen Triebstrang 10 einer Windenergieanlage. Der Triebstrang 10 umfasst einen Rotor 12 mit einer Rotornabe und wenigstens einem Rotorblatt, der durch Windkraft in Drehung versetzt wird. Die Drehung des Rotors 12 wird über eine Rotorwelle 13 auf ein Getriebe 14 übertragen. Das Getriebe 14 ist ausgangsseitig über eine Getriebewelle 15 mit einem Generator 16 verbunden, der die dem Wind mittels des Rotors 12 entnommene mechanische Energie in elektrische Energie umwandelt. Abweichend von der in Fig. 1 dargestellten Ausführung ist die Erfindung auch in Wälzlagern von getriebelosen Windenergieanlagen anwendbar.

Üblicherweise ist das Getriebe 14 derart ausgebildet, dass die Drehzahl der Getriebewelle 15 höher ist als die Drehzahl der Rotorwelle 13. Entsprechend wird die Rotorwelle 13 oft auch als langsame Welle und die Generatorwelle 15 als schnelle Welle bezeichnet. Weitere Bestandteile eines typischen Triebstrangs 10, insbesondere Kupplungen und Bremsen, sind in Fig. 1 nicht dargestellt.

Die drehenden bzw. drehbaren Elemente des Triebstranges, insbesondere die Rotorwelle 13, die Generatorwelle 15 sowie drehende oder drehbare Bauteile innerhalb des Getriebes 14 und innerhalb des Generators 16 sind geeignet gelagert. Hierfür werden in der Regel angestellte Lagerungen mit zwei gegeneinander vorgespannten Wälzlagern verwendet, wobei in einer erfindungsgemäßen Windenergieanlage wenigstens eine dieser Lagerungen als Bestandteil einer erfindungsgemäßen Bauteilanordnung realisiert ist.

Ein Beispiel einer erfindungsgemäßen Bauteilanordnung ist schematisch in Fig. 2 und Fig. 3 gezeigt, welche jedoch einen Drucksensor nur bei einem Wälzlager illustriert. Dabei zeigt Fig. 2 eine längsaxiale Schnittdarstellung und Fig. 3 eine queraxiale Schnittdarstellung in der in Fig. 2 angezeigten Schnittebene A-A.

Die Bauteilanordnung umfasst eine Welle 28, die konzentrisch und drehbar innerhalb eines Gehäuses 20 gelagert ist. Die entsprechende Drehachse ist in Fig. 2 als gestrichelte Linie dargestellt. Die Bauteilanordnung umfasst ferner ein Wälzlagerpaar aus zwei als Kegelrollenlager ausgebildeten Wälzlagern 26, 26', die jeweils einen an der Welle 28 anliegenden Innenring 261 und einen an dem Gehäuse 20 anliegenden Außenring 264 aufweisen. Die Wälzlager 26, 26' umfassen jeweils kegelförmige Wälzkörper 263, die jeweils auf einer äußeren Lauffläche 265 eines Außenrings 264 und auf einer inneren Lauffläche 262 eines Innenrings 261 abrollen.

In axialer Richtung liegt der Außenring 264 des einen Wälzlagers 26' an insgesamt drei Drucksensoren 27 an, die in diesem Beispiel in Aussparungen 21 an einer queraxialen Rückwand des Gehäuses 20 angeordnet sind. Bei dünn ausgeführten Sensoren werden diese direkt auf der Gehäuserückwand angeordnet. Der Innenring 261 desselben Wälzlagers 26' liegt in entgegengesetzter Richtung an einem Anschlag 29 an der Welle 28 an.

Der Innenring 261 des anderen Wälzlagers 26, das spiegelsymmetrisch zu dem Wälzlager 26' angeordnet ist, liegt in axialer Richtung ebenfalls an dem Anschlag 29 an.

An der der Gehäuserückwand entgegengesetzten Seite wird das Gehäuse 20 mittels eines über Schraubverbindungen 23 an dem Gehäuse 20 befestigten Gehäusedeckels 22 verschlossen. Zwischen dem Gehäusedeckel 22 und dem Außenring 264 des Wälzlagers 26 befindet sich ein Distanzring 24, der in seiner Dicke, d.h. in seiner längsaxialen Ausdehnung, derart angepasst ist, dass die beiden Wälzlager 26, 26' und die Welle 28 in axialer Richtung mit einer vorgegebenen Spannkraft zwischen der Rückwand des Gehäuses 20 und dem Gehäusedeckel 22 vorgespannt oder verspannt werden.

Es ergibt sich somit ein Kraftfluss der Spannkraft, die von dem Gehäusedeckel 22 über den Distanzring 24, den Außenring 264, die Wälzkörper 263 sowie den Innenring 261 des Wälzlagers 26, den Anschlag 29 der Welle 28, den Innenring 261, die Wälzkörper 263 sowie den Außenring 264 des linken Wälzlagers, die Drucksensoren 27 bis zur Rückwand des Gehäuses 20 verläuft und dort abgestützt wird, wodurch insbesondere das Gehäuse 20 und die Verschraubungen 23 des Gehäusedeckels 22 in axialer Richtung zugbelastet werden.

Die Innenringe 261, Wälzkörper 263 und Außenringe 264 der Wälzlager 26, 26' werden mittels der Spannkraft auf eine Bauhöhenreduktion gegeneinander gedrückt, wodurch die Wälzlager 26, 26' vorgespannt werden. Diese Vorspannung ist dabei mittels der Drucksensoren 27, die erfindungsgemäß ebenfalls im Kraftfluss der Spannkraft angeordnet sind, messbar oder bestimmbar.

Idealerweise sind radiale Komponenten der Vorspannung, die durch Umlenkung der Spannkraft innerhalb der Wälzlager 26, 26' auftreten, symmetrisch und heben sich entsprechend gegenseitig auf. Dadurch werden die Wälzlager 26, 26' beim Vorspannen, insbesondere beim Anlegen der Spannkraft, parallel zueinander und konzentrisch zu der Drehachse ausgerichtet.

In der Realität treten jedoch auch asymmetrische radiale Komponenten der Vorspannung auf, insbesondere aufgrund von Gravitations- oder Gewichtskräften. Dies ist beispielsweise bei einer Rotorwelle 13 aufgrund des hohen Gewichtes des Rotors 12 regelmäßig der Fall.

Um eine asymmetrische radiale Komponente der Vorspannung erkennen oder bestimmen zu können, sind drei Drucksensoren 27 vorgesehen, die wie in Fig. 3 dargestellt entlang eines Kreises um die Drehachse in gleichmäßigem Abstand zueinander angeordnet sind.

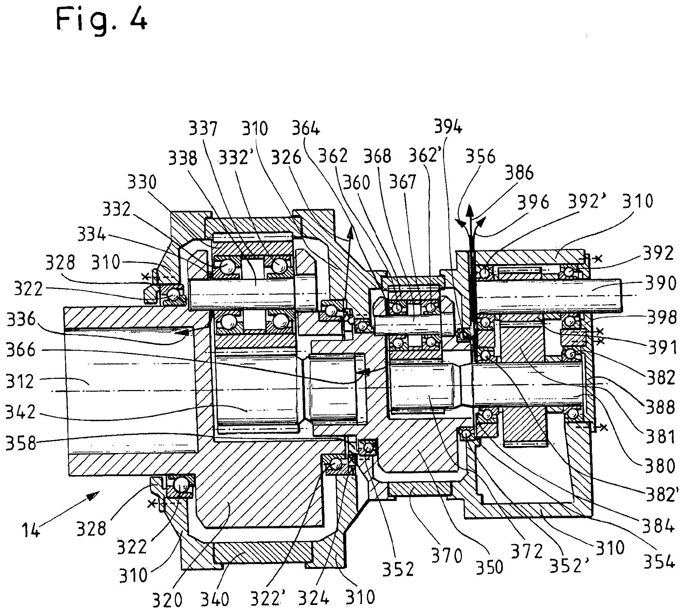

Fig. 4 zeigt ein erfindungsgemäß ausgebildetes Getriebe 14 für einen Triebstrang 10 einer Windenergieanlage. Die Abbildung zeigt eine Schnittdarstellung, wobei Komponenten, die die Schnittebene der Darstellung erkennbar mehrfach schneiden, aus Gründen der Übersichtlichkeit teilweise mit nur einem Bezugszeichen versehen sind.

Das exemplarisch gezeigte Getriebe 14 verfügt eingangsseitig über eine Wellenaufnahme 312 für eine Rotorwelle 13 und ausgangsseitig über eine Abtriebswelle 390, die mit einem Generator 16 verbunden oder verbindbar ist.

Das Getriebe 14 ist dreistufig mit einer ersten Planetenstufe, einer zweiten Planetenstufe sowie einer Stirnradstufe ausgebildet. Die drei Stufen des Getriebes 14 sind dabei derart ausgebildet, dass die Drehzahl stufenweise erhöht wird, so dass die Drehzahl der Abtriebswelle 390, die auch als schnelle Welle bezeichnet wird, wesentlich höher ist als die Drehzahl der Rotorwelle 13, die auch als langsame Welle bezeichnet wird.

Die erste Planetenstufe umfasst einen Planetenträger 320 mit der Wellenaufnahme 312 und wenigstens einem drehbar am Planetenträger 320 angeordneten Planetenrad 330, ein feststehendes, in ein Gehäuse 310 des Getriebes 14 integriertes Hohlrad 340 sowie ein Sonnenrad 342. Das Planetenrad 330 läuft zwischen dem Hohlrad 340 und dem Sonnenrad 342 um, wobei das Planetenrad 330, das Hohlrad 340 sowie das Sonnenrad 342 jeweils miteinander in Eingriff stehende Verzahnungen aufweisen.

Das Planetenrad 330 ist mittels eines Achsbolzens 338 in einer entsprechenden Aufnahme des Planetenträgers 320 befestigt und mittels zweier als Schrägkugellager ausgebildeter Wälzlager 332, 332' drehbar um den Achsbolzen 338 gelagert. Die Wälzlager 332, 332' bilden eine angestellte Lagerung in sogenannter O-Anordnung.

Das Planetenrad 330 ist als innengelagertes Zahnrad ausgebildet, an dem die Außenringe der Wälzlager 332, 332' anliegen, wobei ein Distanzring 337 zwischen den Außenringen angeordnet ist. Alternativ können die Außenringe der Wälzlager 332, 332' in das Planetenrad 330 radial eingepresst und dadurch dreh- und schiebefest mit dem Planetenrad 330 verbunden werden. Die Innenringe der Wälzlager 332, 332' sind am Achsbolzen 338 angeordnet. Alternativ können bei integrierten Lagerlaufbahnen Innen- oder Außenring entfallen.

Der Achsbolzen 338 weist einen Bolzenkopf auf, an dem sich der Innenring des Wälzlagers 332' axial abstützt. An der entgegengesetzten Seite ist der Achsbolzen 338 in eine Öffnung im Planetenträger 320 derart eingepresst, dass die Wälzlager 332, 332' zwischen dem Bolzenkopf des Achsbolzens 338 und dem Planetenträger 320 vorgespannt werden. Der Bolzenkopf ist in einer Bohrung des Planetenträgers 320 angeordnet und wird entsprechend radial abgestützt. Dadurch wird eine Verkippung des Planetenrades 330 relativ zum Planetenträger 320 verhindert.

Zwischen dem Planetenträger 320 und dem Innenring des Wälzlagers 332 sind als Dünnschichtsensoren ausgebildete Drucksensoren 334 zur Bestimmung der Vorspannung der Wälzlager 332, 332' angeordnet. Für Betrieb und Auslese der Drucksensoren 334 ist eine Sensorverkabelung 336 vorgesehen. Diese wird durch den Planetenträger 320 hindurch zur Wellenaufnahme 312 geführt.

Zur Montage des Planetenrades 330 werden beispielsweise zunächst die Drucksensoren 334 am Planetenträger angeordnet, die Sensorverkabelung 336 bis zur Wellenaufnahme 312 installiert und an die Sensorverkabelung 336 temporär eine Auswertungsvorrichtung für die Drucksensoren 334 angeschlossen. Die Drucksensoren 334 sind vorzugsweise bereits kalibriert und sind daher während der fortlaufenden Montage einsatzbereit.

Anschließend wird das Planetenrad 330 mit den beiden Wälzlagern 332, 332' am Planetenträger 320 angeordnet und der Achsbolzen 338 in die entsprechende Aufnahme eingepresst. Dabei wird die Vorspannung der Wälzlager 332, 332' mittels der Drucksensoren 334 und der Auswertungsvorrichtung bestimmt oder ermittelt und der Achsbolzen 338 so weit in die Aufnahme am Planetenträger 320 eingepresst, bis die gewünschte Vorspannung erreicht ist. Das Bestimmen der Vorspannung und das Einpressen des Achsbolzens 338 können dabei simultan oder abwechselnd erfolgen.

Anschließend wird beispielsweise die Auswertungsvorrichtung von der Sensorverkabelung 336 getrennt und es werden geeignete Mittel installiert, um über die Sensorverkabelung 336 bei der Wellenaufnahme 312, die im bestimmungsgemäß eingesetzten Getriebe rotiert, auch im Betrieb des Getriebes 14 den Betrieb und die Auslese der Drucksensoren 334 zu gewährleisten. Hierfür geeignete Mittel sind beispielsweise Schleifringe oder Induktionsschleifen.

Der Planetenträger 320 mit dem darauf montierten Planetenrad 330 ist mittels zweier als Schrägkugellager ausgebildeter Wälzlager 322, 322' drehbar innerhalb des Gehäuses 310 gelagert. Die Wälzlager 322, 322' weisen jeweils einen am Planetenträger 320 angeordneten Innenring und einen am Gehäuse 310 angeordneten Außenring auf, wobei die Wälzlager eine angestellte Lagerung in sogenannter X-Anordnung bilden.

Die Lagerung des Planetenträgers 320 bzw. die beiden Wälzlager 322, 322' sind ebenfalls vorgespannt. Hierfür ist vorgesehen, dass der Außenring des Wälzlagers 322 mittels eines mit dem Gehäuse 310 verschraubten Gehäusedeckels 328 mit einer Spannkraft beaufschlagt wird. Zur Anpassung der Spannkraft können beispielsweise Einlegebleche geeigneter Dicke zwischen dem Gehäusedeckel 328 und dem Außenring des einen Wälzlagers 322 vorgesehen sein.

Zwischen dem anderen Wälzlager 322' und dem Gehäuse 310 sind als Dünnschichtsensoren ausgebildete Drucksensoren 324 vorgesehen, mittels derer die Vorspannung der Wälzlager 322, 322' bestimmbar ist. Die Drucksensoren 324 sind gleichmäßig entlang des Umfangs des Außenrings des Wälzlagers 322' angeordnet. Zum Betreiben und Auslesen der Drucksensoren 324 ist eine Sensorverkabelung 326 vorgesehen, die durch das Gehäuse 310 geführt ist. An der Gehäuseaußenseite ist die Sensorverkabelung 326 frei zugänglich und kann beispielsweise mit einer nicht dargestellten Auswertungsvorrichtung verbunden werden.

Die zweite Planetenstufe weist ebenfalls einen Planetenträger 350 mit wenigstens einem Planetenrad 360, ein feststehendes Hohlrad 370 sowie ein Sonnenrad 372 auf. Der Planetenträger 350 der zweiten Planetenstufe ist dabei drehfest mit dem Sonnenrad 342 der ersten Planetenstufe verbunden.

Die zweite Planetenstufe ist aufgrund der höheren Drehzahl und entsprechend geringerer auftretender Drehmomente etwas kleiner dimensioniert als die erste Planetenstufe, ansonsten jedoch wie die erste Planetenstufe aufgebaut. Bezüglich der Lagerung der einzelnen Bauteile wird sinngemäß auf die Beschreibung zur ersten Planetenstufe verwiesen. Auch die Montage des Planetenrades 360 am Planetenträger 350 erfolgt entsprechend der Montage des Planetenrades 330 am Planetenträger 320.

Die Planetenstufen werden in einer bevorzugten Ausführung insbesondere nacheinander, beginnend mit der zweiten Planetenstufe, montiert. Hierfür wird zunächst das Gehäuse 310 des Getriebes 14 in eine erste Montageposition gebracht, in der die Drehachse des Planetenträgers 350 der zweiten Stufe, dargestellt in Fig. 4 als strichpunktierte Linie, vertikal orientiert ist, wobei der Gehäuseteil für die Planetenstufen oben und der Gehäuseteil für die Stirnradstufe unten angeordnet ist.

Zunächst werden die Drucksensoren 354 und die entsprechende Sensorverkabelung 356 installiert und an die Sensorverkabelung eine Auswertungsvorrichtung angeschlossen, so dass die Drucksensoren 354 während der laufenden Montage betriebsbereit sind.

Nacheinander werden nun das Wälzlager 352', der vormontierte Planetenträger 350 mit wenigstens einem Planetenrad 360 sowie das Wälzlager 352 in das Gehäuse 310 eingelegt.

Bei jedem Schritt werden dabei beispielsweise die Drucksensoren 354 auslesen, so dass aufgrund der bekannten Massen der jeweiligen Komponenten und des entsprechend bekannten Drucks, den die auf den Drucksensoren 354 aufliegenden Komponenten auf die Drucksensoren 354 ausüben, eine Kalibrationstabelle für die Drucksensoren 354 erstellt wird.

Bei guter Linearität, d.h. bei linearem Ansprechverhalten, und guter Homogenität, d.h. hoher Ähnlichkeit im Ansprechverhalten im Vergleich mit gleichartigen Dünnschichtsensoren, der Drucksensoren 354 ist gegebenenfalls eine Offset-Kalibration ausreichend, beispielsweise mittels einer Auslese und Auswertung der installierten, unbelasteten Drucksensoren 354. Bei guter Linearität, aber schlechter Homogenität ist in der Regel eine Zweipunkt-Kalibration, beispielsweise mittels einer Auslese der unbelasteten Drucksensoren 354 und einer Auslese nach Einlegen aller zuvor beschriebener Komponenten, ausreichend.

Alternativ oder ergänzend hierzu können die Drucksensoren 354 auch vorab geeignet kalibriert worden sein, beispielsweise in einer geeigneten Prüfmaschine.

Anschließend wird der Lagerdeckel 358 mit dem Gehäuse 310 verschraubt und dadurch die Wälzlager 352, 352' mit einer Spannkraft beaufschlagt. Anhand der Drucksensoren 354 wird die resultierende Vorspannung der Wälzlager bestimmt. Gegebenenfalls wird die Spannkraft, beispielsweise mittels Passblechen oder Distanzringen zwischen dem Lagerdeckel 358 und dem Außenring des Wälzlagers 352, so lange angepasst, bis die gewünschte Vorspannung der Wälzlager 352, 352' erreicht ist. Dabei können auch dynamische Spannmittel, beispielsweise hydraulisch spreizbare Distanzringe, verwendet werden, so dass die Verschraubung des Gehäusedeckels nicht mehrfach geöffnet und geschlossen werden muss.

Eine weitere Kontrolle auf korrekte Vorspannung der Wälzlager kann beispielsweise erfolgen, indem das Getriebe 14 in die Betriebsposition, in der insbesondere die Drehachse des Planetenträgers 350 horizontal oder im Wesentlichen horizontal orientiert ist, gedreht wird und die Vorspannung der Wälzlager 352, 352' bei stehendem und/oder drehendem Planetenträger 350 nochmals mittels der Drucksensoren 354 bestimmt wird.

Die Montage der ersten Planetenstufe erfolgt anschließend in gleicher Weise.

Die Stirnradstufe umfasst ein Stirnrad 381 und ein Zahnrad 391, die jeweils eine miteinander in Eingriff stehende Verzahnung aufweisen. Das Stirnrad 381 ist über eine Zwischenwelle 380 mit dem Sonnenrad 372 der zweiten Planetenstufe verbunden, während das Zahnrad 391 drehfest mit der Abtriebswelle 390 des Getriebes 14 verbunden ist.

Die Zwischenwelle 380 ist mittels einer angestellten Lagerung mit zwei als Schrägkugellager ausgebildeten Wälzlagern 382, 382' drehbar innerhalb des Gehäuses 310 gelagert. Die Wälzlager 382, 382' weisen jeweils einen an der Zwischenwelle 380 angeordneten Innenring und einen am Gehäuse 310 angeordneten Außenring auf und bilden eine angestellte Lagerung in sogenannter X-Anordnung.

Die Wälzlager 382, 382' sind mittels eines mit dem Gehäuse 310 verschraubten Gehäusedeckels 388 vorgespannt, wobei der Gehäusedeckel 388 den Außenring des Wälzlagers 382 mit einer Spannkraft beaufschlagt. Gegebenenfalls ist zwischen dem Gehäusedeckel 388 und dem Außenring des Wälzlagers 382 ein Einlegeblech geeigneter Dicke vorgesehen, um die Spannkraft gezielt vorzugeben.

Zwischen dem Außenring des anderen Wälzlagers 382' und dem Gehäuse 310 befinden sich ein oder mehrere als Dünnschichtsensoren ausgebildete Drucksensoren 384 zur Bestimmung der Vorspannung des Wälzlagerpaares 382, 382'. Der bzw. die Drucksensoren 384 werden über eine Sensorverkabelung 386 betrieben und ausgelesen. Die Sensorverkabelung 386 wird dabei durch das Gehäuse 310 zur Gehäuseaußenseite geführt. An der Gehäuseaußenseite ist die Sensorverkabelung 386 frei zugänglich und kann beispielsweise mit einer nicht dargestellten Auswertungsvorrichtung verbunden werden.

Die Abtriebswelle 390 ist ebenfalls mittels einer angestellten Lagerung mit zwei als Schrägkugellager ausgebildeten Wälzlagern 392, 392' drehbar innerhalb des Gehäuses 310 gelagert. Die Wälzlager 392, 392' weisen jeweils einen an der Abtriebswelle 390 angeordneten Innenring und einen am Gehäuse 310 angeordneten Außenring auf.

Eine Vorspannung der Wälzlager 392, 392' wird durch einen mit dem Gehäuse 310 verschraubten Gehäusedeckel 398 erreicht, der den Außenring des Wälzlagers 392 mit einer Spannkraft beaufschlagt. Zwischen dem Außenring des anderen Wälzlagers 392' und dem Gehäuse 310 befinden sich ein oder mehrere als Dünnschichtsensoren ausgebildete Drucksensoren 394 zur Bestimmung der Vorspannung des Wälzlagerpaares 392, 392' bzw. der Lagerung der Abtriebswelle 390.

Der bzw. die Drucksensoren 394 werden über eine Sensorverkabelung 396 betrieben und ausgelesen. Die Sensorverkabelung 396 für den oder die Drucksensoren 398 wird dabei durch das Gehäuse 310 geführt. An der Gehäuseaußenseite ist die Sensorverkabelung 396 frei zugänglich und kann beispielsweise mit einer nicht dargestellten Auswertungsvorrichtung verbunden werden.

Die Montage der Stirnradstufe erfolgt vorzugsweise in einer zweiten Montageposition des Gehäuses, bei dem die Drehachsen der Zwischenwelle 380 und der Abtriebswelle 390 vertikal angeordnet sind, wobei der Gehäuseteil für die Stirnradstufe oben und der Gehäuseteil für die Planetenstufen unten angeordnet sind. Dabei kann die Montage der Stirnradstufe sowohl vor als auch nach der Montage der Planetenstufen erfolgen.

Die Montage der Zwischenwelle 380, der Wälzlager 382, 382', der Drucksensoren 384, der Sensorverkabelung 386 und des Gehäusedeckels 388 sowie die Montage der Abtriebswelle 390, der Wälzlager 392, 392', der Drucksensoren 394, der Sensorverkabelung 396 und des Gehäusedeckels 398 erfolgt jeweils entsprechend der beschriebenen Montage des Planetenträgers 350, der Wälzlager 352, 352', der Drucksensoren 354, der Sensorverkabelung 356 und des Gehäusedeckels 358.

Der Schutzumfang der Erfindung ist durch die Ansprüche definiert.

### Bezugszeichenliste

- 10: Triebstrang
- 12: Rotor
- 13: Rotorwelle
- 14: Getriebe
- 15: schnelle Welle
- 16: Generator
- 20: Gehäuse
- 21: Aussparung
- 22: Gehäusedeckel
- 23: Verschraubung
- 24: Distanzring
- 26, 26': Kegelrolllager
- 261: Innenring
- 262: innere Läuffläche
- 263: Wälzkegel
- 264: Außenring
- 265: äußere Lauffläche
- 27: Drucksensor
- 28: Welle
- 29: Anschlag
- 310: Gehäuse
- 312: Wellenaufnahme
- 320: Planetenträger
- 322, 322': Wälzlager
- 324: Dünnschichtsensor
- 326: Sensorverkabelung
- 328: Gehäusedeckel
- 330: Planetenrad
- 332, 332': Wälzlager
- 334: Dünnschichtsensor
- 336: Sensorverkabelung
- 337: Dinstanzring
- 338: Achsbolzen
- 340: Hohlrad
- 342: Sonnenrad
- 350: Planetenträger
- 352, 352': Wälzlager
- 354: Dünnschichtsensor
- 356: Sensorverkabelung
- 358: Gehäusedeckel
- 360: Planetenrad
- 362, 362': Wälzlager
- 364: Dünnschichtsensor
- 366: Sensorverkabelung
- 367: Distanzring
- 368: Achsbolzen
- 370: Hohlrad
- 372: Sonnenrad
- 380: Zwischenwelle
- 381: Stirnrad
- 382, 382': Wälzlager
- 384: Dünnschichtsensor
- 386: Sensorverkabelung
- 388: Gehäusedeckel
- 390: Abtriebswelle
- 391: Zahnrad
- 392, 392': Wälzlager
- 394: Dünnschichtsensor
- 396: Sensorverkabelung
- 398: Gehäusedeckel

## Patentansprüche

1. Bauteilanordnung für eine Windenergieanlage umfassend ein äußeres Bauteil (20, 310, 330, 360), ein innerhalb des äußeren Bauteils (20, 310, 330, 360) angeordnetes inneres Bauteil (28, 320, 338, 350, 368, 380, 390) und ein Wälzlagerpaar (26, 26'; 322, 322'; 332, 332'; 352, 352'; 362, 362'; 382, 382'; 392, 392'), das ein erstes Wälzlager (26, 26', 322, 322', 332, 332', 352, 352', 362, 362', 382, 382', 392, 392') und ein zweites Wälzlager (26, 26', 322, 322', 332, 332', 352, 352, 362, 362', 382, 382', 392, 392'), die angestellt zueinander angeordnet sind, aufweist und mittels einer Spannkraft vorgespannt ist, wobei das innere Bauteil (28, 320, 338, 350, 368, 380, 390) und das äußere Bauteil (20, 310, 330, 360) mittels des Wälzlagerpaares (26, 26'; 322, 322'; 332, 332'; 352, 352'; 362, 362'; 382, 382'; 392, 392') um eine Drehachse drehbar zueinander gelagert sind, wobei die Bauteilanordnung ferner einen in einem Kraftfluss der Spannkraft angeordneten Drucksensor (27, 324, 334, 354, 364, 384, 394) zur Bestimmung einer Vorspannung des Wälzlagerpaares (26, 26'; 322, 322'; 332, 332'; 352, 352'; 362, 362'; 382, 382'; 392, 392') umfasst, wobei der Drucksensor (27, 324, 334, 354, 364, 384, 394) als Dünnschichtsensor ausgebildet ist und wenigstens einen bei dem ersten Wälzlager (26, 26', 322, 322', 332, 332', 352, 352', 362, 362', 382, 382', 392, 392') angeordneten ersten Drucksensor (27, 324, 334, 354, 364, 384, 394) und einen bei dem zweiten Wälzlager (26, 26', 322, 322', 332, 332', 352, 352', 362, 362', 382, 382', 392, 392') angeordneten zweiten Drucksensor (27, 324, 334, 354, 364, 384, 394) umfasst.

2. Bauteilanordnung nach Anspruch 1, **dadurch gekennzeichnet, dass** die Bauteilanordnung zum Vorspannen des Wälzlagerpaares (26, 26'; 322, 322'; 332, 332'; 352, 352'; 362, 362'; 382, 382'; 392, 392') mittels einer vorgebbaren Spannkraft eine an dem ersten Wälzlager (26, 26', 322, 322', 332, 332', 352, 352', 362, 362', 382, 382', 392, 392') angreifende erste Spannvorrichtung (22, 232, 24; 328; 358; 388; 398) und/oder eine an dem zweiten Wälzlager (26, 26', 322, 322', 332, 332', 352, 352', 362, 362', 382, 382', 392, 392') angreifende zweite Spannvorrichtung (22, 232, 24; 328; 358; 388; 398) umfasst.

3. Bauteilanordnung nach Anspruch 2, **dadurch gekennzeichnet, dass** der Drucksensor (27, 324, 334, 354, 364, 384, 394) an einer einer Spannvorrichtung (22, 232, 24; 328; 358; 388; 398) abgewandten Seite eines Wälzlagers (26, 26'; 322, 322'; 332, 332'; 352, 352'; 362, 362'; 382, 382', 392, 392') angeordnet ist.

4. Bauteilanordnung nach einem der Ansprüche 1 bis 3, **dadurch gekennzeichnet, dass** der Drucksensor (27, 324, 334, 354, 364, 384, 394) als Dünnschichtsensor (27, 324, 334, 354, 364, 384, 394) mit einer piezo-elektrischen oder piezo-resistiven Sensorschicht ausgebildet ist.

5. Bauteilanordnung nach Anspruch 4, **dadurch gekennzeichnet, dass** der Dünnschichtsensor (27, 324, 334, 354, 364, 384, 394) als eigenständiges Bauteil, insbesondere mit einem von den übrigen Bestandteilen der Bauteilanordnung unabhängigen Schichtträger für die Sensorschicht, ausgebildet ist.

6. Bauteilanordnung nach einem der Ansprüche 1 bis 5, **dadurch gekennzeichnet, dass** die Bauteilanordnung eine Auswertungsvorrichtung zur Auswertung von Messsignalen des Drucksensors (27, 324, 334, 354, 364, 384, 394) aufweist.

7. Bauteilanordnung nach einem der Ansprüche 1 bis 6, **dadurch gekennzeichnet, dass** die Bauteilanordnung wenigstens drei Drucksensoren (27, 324, 334, 354, 364, 384, 394), die insbesondere in einer quer zur Drehachse orientierten Ebene angeordnet sind, umfasst.

8. Bauteilanordnung nach einem der Ansprüche 1 bis 7, **dadurch gekennzeichnet, dass** die Bauteilanordnung als ein Bestandteil für einen Triebstrang (10) der Windenergieanlage, insbesondere als eine Rotorlagerung, als ein Getriebe (14), als ein Generator (16) oder als ein Teil einer Rotorlagerung, eines Getriebes (14) oder eines Generators (16), ausgebildet ist.

9. Verfahren zur Montage einer Bauteilanordnung nach einem der Ansprüche 1 bis 8 mit folgenden Verfahrensschritten:
- Kalibrieren wenigstens eines Drucksensors (27, 324, 334, 354, 364, 384, 394) der Bauteilanordnung,
- Vorspannen des Wälzlagerpaares (26, 26'; 322, 322'; 332, 332'; 352, 352'; 362, 362'; 382, 382'; 392, 392') der Bauteilanordnung mit einer vorgebbaren Spannkraft,
- Bestimmen eines Ist-Wertes für eine Vorspannung des Wälzlagerpaares (26, 26'; 322, 322'; 332, 332'; 352, 352'; 362, 362'; 382, 382'; 392, 392') mittels des wenigstens einen Drucksensors (27, 324, 334, 354, 364, 384, 394),
- Vergleichen des Ist-Wertes mit einem vorgegebenen Toleranzintervall um einen Soll-Wert für die Vorspannung, und
- gegebenenfalls Anpassen der Spannkraft, wenn der Ist-Wert außerhalb des Toleranzintervalls liegt.

10. Verfahren nach Anspruch 9, **dadurch gekennzeichnet, dass** das Kalibrieren des wenigstens einen Drucksensors (27, 324, 334, 354, 364, 384, 394) in einer Montageposition der Bauteilanordnung mit vertikal angeordneter Drehachse ohne Anlegen einer Spannkraft unter Ausnutzung einer bekannten Masse des inneren Bauteils (28, 320, 338, 350, 368, 380, 390) und/oder des äußeren Bauteils (20, 310, 330, 360) und/oder eines der beiden Wälzlager (26, 26', 322, 322', 332, 332', 352, 352', 362, 362', 382, 382', 392, 392') und/oder beider Wälzlager (26, 26', 322, 322', 332, 332', 352, 352', 362, 362', 382, 382', 392, 392') erfolgt.

11. Windenergieanlage mit einer Bauteilanordnung, insbesondere einer Bauteilanordnung nach einem der Ansprüche 1 bis 8, wobei die Bauteilanordnung ein äußeres Bauteil (20, 310, 330, 360), ein innerhalb des äußeren Bauteils (20, 310, 330, 360) angeordnetes inneres Bauteil (28, 320, 338, 350, 368, 380, 390) und ein Wälzlagerpaar (26, 26'; 322, 322'; 332, 332'; 352, 352'; 362, 362'; 382, 382'; 392, 392'), das ein erstes Wälzlager (26, 26', 322, 322', 332, 332', 352, 352', 362, 362', 382, 382', 392, 392') und ein zweites Wälzlager (26, 26', 322, 322', 332, 332', 352, 352', 362, 362', 382, 382', 392, 392'), die angestellt zueinander angeordnet sind, aufweist und mittels einer Spannkraft vorgespannt ist, wobei das innere Bauteil (28, 320, 338, 350, 368, 380, 390) und das äußere Bauteil (20, 310, 330, 360) mittels des Wälzlagerpaares (26, 26'; 322, 322'; 332, 332'; 352, 352'; 362, 362'; 382, 382'; 392, 392') um eine Drehachse drehbar zueinander gelagert sind, wobei die Bauteilanordnung ferner einen in einem Kraftfluss der Spannkraft angeordneten Drucksensor (27, 324, 334, 354, 364, 384, 394) zur Bestimmung einer Vorspannung des Wälzlagerpaares (26, 26'; 322, 322'; 332, 332'; 352, 352'; 362, 362'; 382, 382'; 392, 392') umfasst, wobei der Drucksensor (27, 324, 334, 354, 364, 384, 394) als Dünnschichtsensor ausgebildet ist und wenigstens einen bei dem ersten Wälzlager (26, 26', 322, 322', 332, 332', 352, 352', 362, 362', 382, 382', 392, 392') angeordneten ersten Drucksensor (27, 324, 334, 354, 364, 384, 394) und einen bei dem zweiten Wälzlager (26, 26', 322, 322', 332, 332', 352, 352', 362, 362', 382, 382', 392, 392') angeordneten zweiten Drucksensor (27, 324, 334, 354, 364, 384, 394) umfasst.

12. Windenergieanlage nach Anspruch 11, **dadurch gekennzeichnet, dass** die Windenergieanlage ein Betriebsüberwachungssystem zur Erkennung von Betriebsstörungen umfasst, wobei insbesondere das Betriebsüberwachungssystem eine Auswertungsvorrichtung zum Auswerten von Messsignalen wenigstens eines Drucksensors (27, 324, 334, 354, 364, 384, 394) der Bauteilanordnung umfasst oder mit einer Auswertungsvorrichtung zur Auswertung von Messsignalen wenigstens eines Drucksensors (27, 324, 334, 354, 364, 384, 394) der Bauteilanordnung verbunden oder verbindbar ist.

13. Verfahren zum Betreiben einer Windenergieanlage, insbesondere einer Windenergieanlage nach Anspruch 11 oder 12, mit einer Bauteilanordnung umfassend ein äußeres Bauteil (20, 310, 330, 360), ein innerhalb des äußeren Bauteils (20, 310, 330, 360) angeordnetes inneres Bauteil (28, 320, 338, 350, 368, 380, 390) und ein Wälzlagerpaar (26, 26'; 322, 322'; 332, 332'; 352, 352'; 362, 362'; 382, 382'; 392, 392'), das ein erstes Wälzlager (26, 26', 322, 322', 332, 332', 352, 352', 362, 362', 382, 382', 392, 392') und ein zweites Wälzlager (26, 26', 322, 322', 332, 332', 352, 352', 362, 362', 382, 382', 392, 392'), die angestellt zueinander angeordnet sind, aufweist und mittels einer axial angreifenden Spannkraft vorgespannt ist, wobei das innere Bauteil (28, 320, 338, 350, 368, 380, 390) und das äußere Bauteil (20, 310, 330, 360) mittels des Wälzlagerpaares (26, 26'; 322, 322'; 332, 332'; 352, 352'; 362, 362'; 382, 382'; 392, 392') drehbar zueinander gelagert sind, wobei das Verfahren die folgenden Verfahrensschritte umfasst:
- Bestimmen eines Ist-Wertes für die Vorspannung des Wälzlagerpaares (26, 26'; 322, 322'; 332, 332'; 352, 352'; 362, 362'; 382, 382'; 392, 392') mittels eines in einem Kraftfluss der Spannkraft angeordneten Drucksensors (27, 324, 334, 354, 364, 384, 394), wobei der Drucksensor (27, 324, 334, 354, 364, 384, 394) als Dünnschichtsensor ausgebildet ist und wenigstens einen bei dem ersten Wälzlager (26, 26', 322, 322', 332, 332', 352, 352', 362, 362', 382, 382', 392, 392') angeordneten ersten Drucksensor (27, 324, 334, 354, 364, 384, 394) und einen bei dem zweiten Wälzlager (26, 26', 322, 322', 332, 332', 352, 352', 362, 362', 382, 382', 392, 392') angeordneten zweiten Drucksensor (27, 324, 334, 354, 364, 384, 394) umfasst,
- Vergleichen des Ist-Wertes mit einem vorgegebenen ersten Referenzintervall um einen Soll-Wert für die Vorspannung, und
- Unterbrechen des Betriebs der Windenergieanlage, wenn der Ist-Wert außerhalb des ersten Referenzintervalls liegt.

14. Verfahren nach Anspruch 13, **dadurch gekennzeichnet, dass** der bestimmte Ist-Wert für die Vorspannung mit einem vorgegebenen zweiten Referenzintervall um den Soll-Wert für die Vorspannung, das insbesondere ein Teilintervall des ersten Referenzintervalls ist, verglichen wird, wobei die Spannkraft während einer anschließenden, insbesondere routinemäßig erfolgenden, Betriebsunterbrechung der Windenergieanlage angepasst wird, wenn der Ist-Wert außerhalb des zweiten Referenzintervalls liegt.

## Claims

1. A component assembly for a wind energy installation comprising an outer component (20, 310, 330, 360), an inner component (28, 320, 338, 350, 368, 380, 390) which is arranged within the outer component (20, 310, 330, 360) and a pair of rolling bearings (26, 26'; 322, 322'; 332, 332'; 352, 352'; 362, 362'; 382, 382'; 392, 392') which comprises a first rolling bearing (26, 26', 322, 322', 332, 332', 352, 352', 362, 362', 382, 382', 392, 392') and a second rolling bearing (26, 26', 322, 322', 332, 332', 352, 352, 362, 362', 382, 382', 392, 392'), which are arranged at an angle with respect to one another, and which pair of rolling bearings (26, 26'; 322, 322'; 332, 332'; 352, 352'; 362, 362'; 382, 382'; 392, 392') is preloaded by means of a biasing force, wherein the inner component (28, 320, 338, 350, 368, 380, 390) and the outer component (20, 310, 330, 360) are supported by means of the pair of rolling bearings (26, 26'; 322, 322'; 332, 332'; 352, 352'; 362, 362'; 382, 382'; 392, 392') in such a way that they are rotatable with respect to one another about an axis of rotation, wherein the component assembly further comprises a pressure sensor (27, 324, 334, 354, 364, 384, 394) which is arranged in a force flow of the biasing force for determining a preload of the pair of roller bearings (26, 26'; 322, 322'; 332, 332'; 352, 352'; 362, 362'; 382, 382'; 392, 392'), wherein the pressure sensor (27, 324, 334, 354, 364, 384, 394) is constructed as a thin-film sensor and comprises at least a first pressure sensor (27, 324, 334, 354, 364, 384, 394) which is arranged at the first rolling bearing (26, 26', 322, 322', 332, 332', 352, 352', 362, 362', 382, 382', 392, 392') and a second pressure sensor (27, 324, 334, 354, 364, 384, 394) which is arranged at the second rolling bearing (26, 26', 322, 322', 332, 332', 352, 352', 362, 362', 382, 382', 392, 392').

2. The component assembly according to claim 1, **characterised in that** the component assembly comprises, for preloading the pair of rolling bearings (26, 26'; 322, 322'; 332, 332'; 352, 352'; 362, 362'; 382, 382'; 392, 392') by means of a predeterminable biasing force, a first biasing device (22, 232, 24; 328; 358; 388; 398) acting on the first rolling bearing (26, 26', 322, 322', 332, 332', 352, 352', 362, 362', 382, 382', 392, 392') and/or a second biasing device (22, 232, 24; 328; 358; 388; 398) acting on the second rolling bearing (26, 26', 322, 322', 332, 332', 352, 352', 362, 362', 382, 382', 392, 392').

3. The component assembly according to claim 2, **characterised in that** the pressure sensor (27, 324, 334, 354, 364, 384, 394) is arranged on a side of a rolling bearing (26, 26'; 322, 322'; 332, 332'; 352, 352'; 362, 362'; 382, 382', 392, 392') which faces away from a biasing device (22, 232, 24; 328; 358; 388; 398).

4. The component assembly according to any one of the claims 1 to 3, **characterised in that** the pressure sensor (27, 324, 334, 354, 364, 384, 394) is constructed as a thin-film sensor (27, 324, 334, 354, 364, 384, 394) with a piezoelectric or piezoresistive sensor layer.

5. The component assembly according to claim 4, **characterised in that** the thin-film sensor (27, 324, 334, 354, 364, 384, 394) is constructed as an independent component, in particular with a layer carrier for the sensor layer which layer carrier is independent of the other components of the component assembly.

6. The component assembly according to any one of the claims 1 to 5, **characterised in that** the component assembly comprises an evaluation device for evaluating measurement signals of the pressure sensor (27, 324, 334, 354, 364, 384, 394).

7. The component assembly according to any one of the claims 1 to 6, **characterised in that** the component assembly comprises at least three pressure sensors (27, 324, 334, 354, 364, 384, 394) which are arranged in particular in a plane which is oriented transversely to the axis of rotation.

8. The component assembly according to any one of the claims 1 to 7, **characterised in that** the component assembly is constructed as a component for a drive train (10) of the wind energy installation, in particular as a rotor bearing, as a gearbox (14), as a generator (16), or as part of a rotor bearing, a gearbox (14) or a generator (16).

9. A method of assembling a component assembly according to any one of the claims 1 to 8, comprising the following method steps:
- calibrating at least one pressure sensor (27, 324, 334, 354, 364, 384, 394) of the component assembly,
- preloading the pair of rolling bearings (26, 26'; 322, 322'; 332, 332'; 352, 352'; 362, 362'; 382, 382'; 392, 392') of the component assembly with a predeterminable biasing force,
- determining an actual value for a preload of the pair of rolling bearings (26, 26'; 322, 322'; 332, 332'; 352, 352'; 362, 362'; 382, 382'; 392, 392') by means of the at least one pressure sensor (27, 324, 334, 354, 364, 384, 394),
- comparing the actual value with a predetermined tolerance interval around a target value for the preload, and
- if necessary, adjusting the biasing force if the actual value lies outside the tolerance interval.

10. The method according to claim 9, **characterised in that** the calibration of the at least one pressure sensor (27, 324, 334, 354, 364, 384, 394) is carried out in a mounting position of the component assembly with a vertically arranged axis of rotation without applying a biasing force by utilising a known mass of the inner component (28, 320, 338, 350, 368, 380, 390) and/or of the outer component (20, 310, 330, 360) and/or of one of the two rolling bearings (26, 26', 322, 322', 332, 332', 352, 352', 362, 362', 382, 382', 392, 392') and/or of both rolling bearings (26, 26', 322, 322', 332, 332', 352, 352', 362, 362', 382, 382', 392, 392').

11. A wind energy installation comprising a component assembly, in particular a component assembly according to any one of the claims 1 to 8, wherein the component assembly comprises an outer component (20, 310, 330, 360), an inner component (28, 320, 338, 350, 368, 380, 390) which is arranged within the outer component (20, 310, 330, 360) and a pair of rolling bearings (26, 26'; 322, 322'; 332, 332'; 352, 352'; 362, 362'; 382, 382'; 392, 392') which comprises a first rolling bearing (26, 26', 322, 322', 332, 332', 352, 352', 362, 362', 382, 382', 392, 392') and a second rolling bearing (26, 26', 322, 322', 332, 332', 352, 352', 362, 362', 382, 382', 392, 392'), which are arranged at an angle with respect to one another, and which pair of rolling bearings (26, 26'; 322, 322'; 332, 332'; 352, 352'; 362, 362'; 382, 382'; 392, 392') is preloaded by means of a biasing force, wherein the inner component (28, 320, 338, 350, 368, 380, 390) and the outer component (20, 310, 330, 360) are supported by means of the pair of rolling bearings (26, 26'; 322, 322'; 332, 332'; 352, 352'; 362, 362'; 382, 382'; 392, 392') in such a way that they are rotatable with respect to one another about an axis of rotation, wherein the component assembly further comprises a pressure sensor (27, 324, 334, 354, 364, 384, 394) which is arranged in a force flow of the biasing force for determining a preload of the pair of roller bearings (26, 26'; 322, 322'; 332, 332'; 352, 352'; 362, 362'; 382, 382'; 392, 392'), wherein the pressure sensor (27, 324, 334, 354, 364, 384, 394) is constructed as a thin-film sensor and comprises at least a first pressure sensor (27, 324, 334, 354, 364, 384, 394) which is arranged at the first rolling bearing (26, 26', 322, 322', 332, 332', 352, 352', 362, 362', 382, 382', 392, 392') and a second pressure sensor (27, 324, 334, 354, 364, 384, 394) which is arranged at the second rolling bearing (26, 26', 322, 322', 332, 332', 352, 352', 362, 362', 382, 382', 392, 392').

12. The wind energy installation according to claim 11, **characterised in that** the wind energy installation comprises an operational monitoring system for the detection of operational faults, in particular wherein the operational monitoring system comprises an evaluation device for the evaluation of measurement signals of at least one pressure sensor (27, 324, 334, 354, 364, 384, 394) of the component assembly or is connected or can be connected to an evaluation device for the evaluation of measurement signals of at least one pressure sensor (27, 324, 334, 354, 364, 384, 394) of the component assembly.

13. A method of operating a wind energy installation, in particular a wind energy installation according to claim 11 or 12, with a component assembly comprising an outer component (20, 310, 330, 360), an inner component (28, 320, 338, 350, 368, 380, 390) which is arranged within the outer component (20, 310, 330, 360) and a pair of rolling bearings (26, 26'; 322, 322'; 332, 332'; 352, 352'; 362, 362'; 382, 382'; 392, 392') which comprises a first rolling bearing (26, 26', 322, 322', 332, 332', 352, 352', 362, 362', 382, 382', 392, 392') and a second rolling bearing (26, 26', 322, 322', 332, 332', 352, 352', 362, 362', 382, 382', 392, 392'), which are arranged at an angle with respect to one another, and which pair of rolling bearings (26, 26'; 322, 322'; 332, 332'; 352, 352'; 362, 362'; 382, 382'; 392, 392') is preloaded by means of an axially acting biasing force, wherein the inner component (28, 320, 338, 350, 368, 380, 390) and the outer component (20, 310, 330, 360) are supported by means of the pair of rolling bearings (26, 26'; 322, 322'; 332, 332'; 352, 352'; 362, 362'; 382, 382'; 392, 392') in such a way that they are rotatable with respect to one another, wherein the method comprises the following method steps:
- determining an actual value for the preload of the pair of rolling bearings (26, 26'; 322, 322'; 332, 332'; 352, 352'; 362, 362'; 382, 382'; 392, 392') by means of a pressure sensor (27, 324, 334, 354, 364, 384, 394) which is arranged in a force flow of the biasing force, wherein the pressure sensor (27, 324, 334, 354, 364, 384, 394) is constructed as a thin-film sensor and comprises at least a first pressure sensor (27, 324, 334, 354, 364, 384, 394) which is arranged at the first rolling bearing (26, 26', 322, 322', 332, 332', 352, 352', 362, 362', 382, 382', 392, 392') and a second pressure sensor (27, 324, 334, 354, 364, 384, 394) which is arranged at the second rolling bearing (26, 26', 322, 322', 332, 332', 352, 352', 362, 362', 382, 382', 392, 392'),
- comparing the actual value with a predetermined first reference interval around a target value for the preload, and
- interrupting the operation of the wind energy installation if the actual value lies outside the first reference interval.

14. The method according to claim 13, **characterised in that** the actual value which has been determined for the preload is compared with a predetermined second reference interval around the target value for the preload, which is in particular a sub-interval of the first reference interval, wherein the biasing force is adjusted during a subsequent interruption of operation of the wind energy installation, in particular a routinely occurring interruption of operation of the wind energy installation, if the actual value lies outside the second reference interval.

## Revendications

1. Agencement d'éléments pour une installation à énergie éolienne comprenant un élément extérieur (20, 310, 330, 360), un élément intérieur (28, 320, 338, 350, 368, 380, 390) agencé à l'intérieur de l'élément extérieur (20, 310, 330, 360) et une paire de paliers à roulement (26, 26' ; 322, 322' ; 332, 332' ; 352, 352' ; 362, 362' ; 382, 382' ; 392, 392'), qui présente un premier palier à roulement (26, 26', 322, 322', 332, 332', 352, 352', 362, 362', 382, 382', 392, 392') et un deuxième palier à roulement (26, 26', 322, 322', 332, 332', 352, 352, 362, 362', 382, 382', 392, 392'), qui sont agencés inclinés l'un par rapport à l'autre, et est précontrainte au moyen d'une force de serrage, dans lequel l'élément intérieur (28, 320, 338, 350, 368, 380, 390) et l'élément extérieur (20, 310, 330, 360) sont logés l'un par rapport à l'autre de manière rotative autour d'un axe de rotation au moyen de la paire de paliers à roulement (26, 26' ; 322, 322' ; 332, 332' ; 352, 352' ; 362, 362' ; 382, 382' ; 392, 392'), dans lequel l'agencement d'éléments comprend en outre un capteur de pression (27, 324, 334, 354, 364, 384, 394) agencé dans un flux de la force de serrage pour la détermination d'une précontrainte de la paire de paliers à roulement (26, 26' ; 322, 322' ; 332, 332' ; 352, 352' ; 362, 362' ; 382, 382' ; 392, 392'), dans lequel le capteur de pression (27, 324, 334, 354, 364, 384, 394) est réalisé en tant que capteur à couche mince et comprend au moins un premier capteur de pression (27, 324, 334, 354, 364, 384, 394) agencé pour le premier palier à roulement (26, 26', 322, 322', 332, 332', 352, 352', 362, 362', 382, 382', 392, 392') et un deuxième capteur de pression (27, 324, 334, 354, 364, 384, 394) agencé pour le deuxième palier à roulement (26, 26', 322, 322', 332, 332', 352, 352', 362, 362', 382, 382', 392, 392').

2. Agencement d'éléments selon la revendication 1, **caractérisé en ce que** l'agencement d'éléments comprend pour la précontrainte de la paire de paliers à roulement (26, 26' ; 322, 322' ; 332, 332' ; 352, 352' ; 362, 362' ; 382, 382' ; 392, 392') au moyen d'une force de serrage pouvant être prédéfinie un premier dispositif de serrage (22, 232, 24 ; 328 ; 358 ; 388 ; 398) agissant sur le premier palier à roulement (26, 26', 322, 322', 332, 332', 352, 352', 362, 362', 382, 382', 392, 392') et/ou un deuxième dispositif de serrage (22, 232, 24 ; 328 ; 358 ; 388 ; 398) agissant sur le deuxième palier à roulement (26, 26', 322, 322', 332, 332', 352, 352', 362, 362', 382, 382', 392, 392').

3. Agencement d'éléments selon la revendication 2, **caractérisé en ce que** le capteur de pression (27, 324, 334, 354, 364, 384, 394) est agencé sur un côté d'un palier à roulement (26, 26' ; 322, 322' ; 332, 332' ; 352, 352' ; 362, 362' ; 382, 382' ; 392, 392') opposé à un dispositif de serrage (22, 232, 24 ; 328 ; 358 ; 388 ; 398).

4. Agencement d'éléments selon l'une quelconque des revendications 1 à 3, **caractérisé en ce que** le capteur de pression (27, 324, 334, 354, 364, 384, 394) est réalisé en tant que capteur à couche mince (27, 324, 334, 354, 364, 384, 394) avec une couche de détection piézo-électrique ou piézo-résistive.

5. Agencement d'éléments selon la revendication 4, **caractérisé en ce que** le capteur à couche mince (27, 324, 334, 354, 364, 384, 394) est réalisé en tant qu'élément autonome, en particulier avec un support de couche indépendant des autres composants de l'agencement d'éléments pour la couche de détection.

6. Agencement d'éléments selon l'une quelconque des revendications 1 à 5, **caractérisé en ce que** l'agencement d'éléments présente un dispositif d'évaluation pour l'évaluation de signaux de mesure du capteur de pression (27, 324, 334, 354, 364, 384, 394).

7. Agencement d'éléments selon l'une quelconque des revendications 1 à 6, **caractérisé en ce que** l'agencement d'éléments comprend au moins trois capteurs de pression (27, 324, 334, 354, 364, 384, 394), qui sont agencés en particulier dans un plan orienté transversalement à l'axe de rotation.

8. Agencement d'éléments selon l'une quelconque des revendications 1 à 7, **caractérisé en ce que** l'agencement d'éléments est réalisé en tant que composant pour une ligne d'entraînement (10) de l'installation à énergie éolienne, en particulier en tant que logement du rotor, en tant que transmission (14), en tant que générateur (16) ou en tant que partie d'un logement du rotor, d'une transmission (14) ou d'un générateur (16).

9. Procédé de montage d'un agencement d'éléments selon l'une quelconque des revendications 1 à 8, avec les étapes de procédé suivantes :
- calibrage d'au moins un capteur de pression (27, 324, 334, 354, 364, 384, 394) de l'agencement d'éléments,
- précontrainte de la paire de paliers à roulement (26, 26' ; 322, 322' ; 332, 332' ; 352, 352' ; 362, 362' ; 382, 382' ; 392, 392') de l'agencement d'éléments avec une force de serrage pouvant être prédéfinie,
- détermination d'une valeur réelle pour une précontrainte de la paire de paliers à roulement (26, 26' ; 322, 322' ; 332, 332' ; 352, 352' ; 362, 362' ; 382, 382' ; 392, 392') au moyen de l'au moins un capteur de pression (27, 324, 334, 354, 364, 384, 394),
- comparaison de la valeur réelle avec un intervalle de tolérance prédéfini autour d'une valeur de consigne pour la précontrainte, et
- le cas échéant adaptation de la force de serrage, lorsque la valeur réelle se situe en dehors de l'intervalle de tolérance.

10. Procédé selon la revendication 9, **caractérisé en ce que** le calibrage de l'au moins un capteur de pression (27, 324, 334, 354, 364, 384, 394) a lieu dans une position de montage de l'agencement d'éléments avec axe de rotation agencé à la verticale sans application d'une force de serrage en exploitant une masse connue de l'élément intérieur (28, 320, 338, 350, 368, 380, 390) et/ou de l'élément extérieur (20, 310, 330, 360) et/ou d'un des deux paliers à roulement (26, 26', 322, 322', 332, 332', 352, 352', 362, 362', 382, 382', 392, 392') et/ou des deux paliers à roulement (26, 26', 322, 322', 332, 332', 352, 352', 362, 362', 382, 382', 392, 392').

11. Installation à énergie éolienne avec un agencement d'éléments, en particulier un agencement d'éléments selon l'une quelconque des revendications 1 à 8, dans laquelle l'agencement d'éléments un élément extérieur (20, 310, 330, 360), un élément intérieur (28, 320, 338, 350, 368, 380, 390) agencé à l'intérieur de l'élément extérieur (20, 310, 330, 360) et une paire de paliers à roulement (26, 26' ; 322, 322' ; 332, 332' ; 352, 352' ; 362, 362' ; 382, 382' ; 392, 392'), qui présente un premier palier à roulement (26, 26', 322, 322', 332, 332', 352, 352', 362, 362', 382, 382', 392, 392') et un deuxième palier à roulement (26, 26', 322, 322', 332, 332', 352, 352', 362, 362', 382, 382', 392, 392'), qui sont agencés inclinés l'un par rapport à l'autre, et est précontrainte au moyen d'une force de serrage, dans laquelle l'élément intérieur (28, 320, 338, 350, 368, 380, 390) et l'élément extérieur (20, 310, 330, 360) sont logés l'un par rapport à l'autre de manière rotative autour d'un axe de rotation au moyen de la paire de paliers à roulement (26, 26' ; 322, 322' ; 332, 332' ; 352, 352' ; 362, 362' ; 382, 382' ; 392, 392'), dans laquelle l'agencement d'éléments comprend en outre un capteur de pression (27, 324, 334, 354, 364, 384, 394) agencé dans un flux de la force de serrage pour la détermination d'une précontrainte de la paire de paliers à roulement (26, 26' ; 322, 322' ; 332, 332' ; 352, 352' ; 362, 362' ; 382, 382' ; 392, 392'), dans laquelle le capteur de pression (27, 324, 334, 354, 364, 384, 394) est réalisé en tant que capteur à couche mince et comprend au moins un premier capteur de pression (27, 324, 334, 354, 364, 384, 394) agencé pour le premier palier à roulement (26, 26', 322, 322', 332, 332', 352, 352', 362, 362', 382, 382', 392, 392') et un deuxième capteur de pression (27, 324, 334, 354, 364, 384, 394) agencé pour le deuxième palier à roulement (26, 26', 322, 322', 332, 332', 352, 352', 362, 362', 382, 382', 392, 392').

12. Installation à énergie éolienne selon la revendication 11, **caractérisée en ce que** l'installation à énergie éolienne comprend un système de surveillance de fonctionnement pour la détection de dysfonctionnements, dans laquelle en particulier le système de surveillance de fonctionnement comprend un dispositif d'évaluation pour l'évaluation de signaux de mesure d'au moins un capteur de pression (27, 324, 334, 354, 364, 384, 394) de l'agencement d'éléments ou est relié ou peut être relié à un dispositif d'évaluation pour l'évaluation de signaux de mesure d'au moins un capteur de pression (27, 324, 334, 354, 364, 384, 394) de l'agencement d'éléments.

13. Procédé de fonctionnement d'une installation à énergie éolienne, en particulier d'une installation à énergie éolienne selon la revendication 11 ou 12, avec un agencement d'éléments comprenant un élément extérieur (20, 310, 330, 360), un élément intérieur (28, 320, 338, 350, 368, 380, 390) agencé à l'intérieur de l'élément extérieur (20, 310, 330, 360) et une paire de paliers à roulement (26, 26' ; 322, 322' ; 332, 332' ; 352, 352' ; 362, 362' ; 382, 382' ; 392, 392'), qui présente un premier palier à roulement (26, 26', 322, 322', 332, 332', 352, 352', 362, 362', 382, 382', 392, 392') et un deuxième palier à roulement (26, 26', 322, 322', 332, 332', 352, 352', 362, 362', 382, 382', 392, 392'), qui sont agencés inclinés l'un par rapport à l'autre, et est précontrainte au moyen d'une force de serrage agissant axialement, dans lequel l'élément intérieur (28, 320, 338, 350, 368, 380, 390) et l'élément extérieur (20, 310, 330, 360) sont logés l'un par rapport à l'autre de manière rotative au moyen de la paire de paliers à roulement (26, 26' ; 322, 322' ; 332, 332' ; 352, 352' ; 362, 362' ; 382, 382' ; 392, 392'), dans lequel le procédé comprend les étapes de procédé suivantes :
- détermination d'une valeur réelle pour la précontrainte de la paire de paliers à roulement (26, 26' ; 322, 322' ; 332, 332' ; 352, 352' ; 362, 362' ; 382, 382' ; 392, 392') au moyen d'un capteur de pression (27, 324, 334, 354, 364, 384, 394) agencé dans un flux de la force de serrage, dans lequel le capteur de pression (27, 324, 334, 354, 364, 384, 394) est réalisé en tant que capteur à couche mince et comprend au moins un premier capteur de pression (27, 324, 334, 354, 364, 384, 394) agencé pour le premier palier à roulement (26, 26', 322, 322', 332, 332', 352, 352', 362, 362', 382, 382', 392, 392') et un deuxième capteur de pression (27, 324, 334, 354, 364, 384, 394) agencé pour le deuxième palier à roulement (26, 26', 322, 322', 332, 332', 352, 352', 362, 362', 382, 382', 392, 392'),
- comparaison de la valeur réelle avec un premier intervalle de référence prédéfini autour d'une valeur de consigne pour la précontrainte, et
- interruption du fonctionnement de l'installation à énergie éolienne, lorsque la valeur réelle se situe en dehors du premier intervalle de référence.

14. Procédé selon la revendication 13, **caractérisé en ce que** la valeur réelle déterminée pour la précontrainte est comparée avec un deuxième intervalle de référence prédéfini autour de la valeur de consigne pour la précontrainte, qui est en particulier un intervalle partiel du premier intervalle de référence, dans lequel la force de serrage est adaptée pendant une interruption de fonctionnement consécutive, en particulier ayant lieu de manière routinière, de l'installation à énergie éolienne, lorsque la valeur réelle se situe en dehors du deuxième intervalle de référence.
